# EUROPÄISCHE PATENTSCHRIFT

(11) **EP 0 882 773 B1**
(45) Veröffentlichungstag und Bekanntmachung des Hinweises auf die Patenterteilung: **28.07.2004**
(21) Anmeldenummer: 97108896.8
(22) Anmeldetag: 03.06.1997
(51) Int. Cl.: C09D 133/08, C09D 5/02

(54) **Wässriger Lack und Verfahren zu seiner Herstellung**
Aqueous paint and process for producing it
Peinture aqueuse et procédé de sa préparation

(43) Veröffentlichungstag der Anmeldung: 09.12.1998
(73) Patentinhaber: J. W. Ostendorf GmbH & Co. KG, 48653 Coesfeld (DE)
(72) Erfinder: Ostendorf, Michael, 48653 Coesfeld (DE); Brauckmann, Werner, 48720 Rosendahl (DE)
(74) Vertreter: Stenger, Watzke & Ring Patentanwälte

(56) Entgegenhaltungen:
- EP-A- 0 225 612
- EP-A- 0 417 568
- EP-A- 0 694 564
- EP-A- 0 741 173
- WO-A-97/18268
- US-A- 4 745 032
- US-A- 5 135 568
- 'Römpp-Chemie-Lexikon, 9. Aufl., Bd. 3, Seite 2424', 1990, THIEME, STUTTGART
- 'Ulmanns Enzyklopädie der technischen Chemie, 4. Auflage, Bd. 14, Seiten 596, 612-615', 1978, VERLAG CHEMIE, WEINHEIM
- Firmen-Merkblatt SCX-8285 der S.C. Johnson Polymer b.v., Heerenveen, NL, zu Acrylat-Dispersionen für Lacke, datiert 1/10-95

## Beschreibung

Die Erfindung betrifft ein Verfahren zur Herstellung eines Lackes durch Mischung von Wasser, Pigment und Bindemittel, wobei als Bindemittel thixotropierbares Reinacrylat mit einer Mindest-Filmbildungstemperatur von ≤ 14° C sowie ein PU-Verdicker eingemischt werden und einen nach einem solchen Verfahren hergestellten Lack.

Unter Lack im Sinne der vorliegenden Erfindung versteht man üblicherweise weiße oder farbige Anstrichmittel zum Anstrich von Oberflächen wie Holz, Metall, Kunststoff und dergleichen. Auch Lasuren gelten im Sinne der vorliegenden Erfindung als Lack.

Wasserverdünnbare Lacke werden üblicherweise hergestellt unter Verwendung von Wasser und Pigmenten. Darüber hinaus werden optional Verdicker, Entschäumer, Konservierungsmittel, Netzmittel oder sonstige Additive eingesetzt. Als großer und notwendiger Bestandteil wird regelmäßig ein Bindemittel verwendet. Bindemittel werden üblicherweise in Lösungsmitteln gelöst eingesetzt. Derartige vorbekannte, lösungsmittelhaltige Lacke sind beispielsweise lösungsmittelhaltige, lösungsmittelverdünnbare Lacke, wie sie im Firmenmerkblatt SCX-8285 der Firma S. C. Johnson-Polymer b.v., Heerenveen, NL, datiert 1/10-95, beschrieben werden, wobei als Lösungsmitteltyp üblicherweise Kohlenwasserstoffe in einem Gehalt von ca. 60 % verwendet werden. Darüber hinaus sind bekannt lösungsmittelhaltige wasserverdünnbare Lacke, und zwar Acryllacke und Alkydharzlacke. Liegt der Lösungsmittelgehalt bei maximal 10 %, kann das Produkt bereits mit einem Umweltzeichen gemäß RAL UZ12a (blauer Engel) gekennzeichnet werden. Die Lösungsmittel dienen der Erzielung von Viskosität, Verlauf, Offenzeit und Verfilmung.

Die Lösungsmittel stellen bekanntermaßen eine erhebliche Umweltbelastung dar. Sie dampfen aus oder erschweren die Entsorgung der Lacke. Darüber hinaus stellen Sie eine Gesundheitsgefährdung bei der Verarbeitung dar, indem die verarbeitende Person die Lösungsmitteldämpfe einatmet. Schließlich sind Lösungsmittel brennbar, was die Lagerung, den Transport und dergleichen von Lacken problematisch gestaltet. Auch enthalten viele Lacke organische Schwermetallverbindungen, die zur Trocknungsbeschleunigung erforderlich sind (Katalysatoren).

Versuche, Lacke, welche frei von organischen Lösungsmitteln sind zu erzeugen, haben zu schlechten Ergebnissen geführt. Insbesondere lassen sich derartige Lacke nur für den Innenbereich verwenden, sind nicht wetterbeständig und lassen sich schlecht verarbeiten.

Die schlechte Verarbeitbarkeit ergibt sich unter anderem daraus, daß diese Lacke zu schneller Trocknung neigen, so daß sich keine großen Flächen einheitlich und gleichmäßig lackieren lassen. Darüber hinaus neigen die Lacke zur Verklebung, das heißt, aneinanderstoßende, lackierte Oberflächen können miteinander verkleben.

Ausgehend von diesem Stand der Technik liegt der vorliegenden Erfindung die **Aufgabe** zugrunde, einen von organischen Lösungsmitteln freien Lack sowie ein Verfahren zu seiner Herstellung anzugeben, welcher bei guter Verarbeitbarkeit im Innen- und Außenbereich wetterbeständig einsetzbar ist.

Zur technischen **Lösung** dieser Aufgabe wird an einem Verfahren der eingangs genannten Art erfindungsgemäß vorgeschlagen, daß der Lack frei von organischen Lösungsmitteln ist.

Darüber hinaus können enthalten sein Netzmittel, Verdicker, Entschäumer sowie Konservierungsmittel.

Nach dem erfindungsgemäßen Verfahren kann auf jegliche organische Lösungsmittel bei der Herstellung des Lackes verzichtet werden. Es ergibt sich ein innen und außen anwendbarer sowie wetterbeständiger Lack. Der Lack ist vollständig frei von organischen Lösungsmitteln, gebrauchsfähig beziehungsweise gebrauchsfertig, enthält keine organischen Schwermetallverbindungen und ist wasserverdünnbar.

Frei von organischen Lösungsmitteln im Sinne der vorliegenden Erfindung bedeutet technische Lösungsmittelfreiheit von organischen Lösungsmitteln. Da es sich durchweg um technische Produkte handelt, die zur Herstellung des Lackes verwendet werden, können Spuren von Lösungsmitteln physikalisch oder chemisch durchaus nachweisbar sein. Es werden jedoch im Sinne der Erfindung keine Lösungsmittel eingemischt. Es versteht sich von selbst, daß auch das als Bindemittel verwendete Reinacrylat keine Lösungsmittelbestandteile enthält.

Die benannte Mindest-Filmbildungstemperatur (MFT) ist die Temperatur, bei welcher der Lack gerade anfängt, einen einheitlichen Film zu bilden. Üblicherweise liegen diese Filmbildungstemperaturen sehr hoch.

Mit Vorteil wird vorgeschlagen, daß als Bindemittel thixotropierbares Reinacrylat verwendet wird. Die Thixotropierbarkeit des Bindemittels führt zu einer Verfestigung des Lackes, der in einer puddingartigen Konsistenz vorliegt, sich jedoch einfach verarbeiten läßt. Pinsel lassen sich leicht mit dem Lack benetzen und der Lack läßt sich gut verstreichen. Durch die Verfestigung wird jedoch ein Tropfen bei der Verarbeitung vermieden. Zur Erreichung der Thixotropierbarkeit wird vorzugsweise Titanchelat eingemischt.

Gemäß einem weiteren vorteilhaften Vorschlag der Erfindung wird das Reinacrylat als bimodale Acrylatdispersion verwendet. Diese Dispersion weist Acrylatkörper unterschiedlicher Größe auf, die sich bei der Filmbildung besser aneinander anpassen. In erster Linie ergeben sich daraus eine bessere Verarbeitbarkeit und vor allem ein besserer Verlauf des Lackfilms.

Gemäß einem weiteren vorteilhaften Vorschlag der Erfindung wird als Verdicker ein Polyurethan (PU)-Verdicker in wäßriger Lösung verwendet. Die Aufgabe des Verdickers liegt in erster Linie in der besseren Verarbeitbarkeit (gleichmäßigeres Streichergebnis) des Lackes. Der Polyurethan-Verdicker unterstützt diese Eigenschaft und läßt sich insbesondere vom Stoffsystem her hervorragend an das Reinacrylat anpassen.

Verfahrensmäßig stellt die Erfindung ein einfaches und wirtschaftliches Verfahren zur Herstellung eines Lackes, der frei von organischen Lösungsmitteln ist oder von Lasuren bereit. Bei den Lacken handelt es sich um wäßrige Lacke.

Die Erfindung offenbart einen Lack, der frei von organischen Lösungsmitteln ist, hergestellt nach dem oben beschriebenen Verfahren, bestehend aus Wasser, Netzmittel, Verdicker, Entschäumer, Pigment und Konservierungsmitteln sowie Bindemittel in Form von Reinacrylat mit einer Filmbildungstemperatur ≤ 14°C, vorzugsweise 5°C.

Der Lack ist vorteilhafterweise thixotropierbar, was gemäß einem Vorschlag der Erfindung durch die Einmischung von Titanchelat bewirkt wird. Darüber hinaus ist das Bindemittel mit einem Selbstvernetzungsmechanismus versehen. Dieser Selbstvernetzungsmechanismus begünstigt eine hohe Blockfestigkeit, woraus eine Klebfreiheit nach der Verarbeitung resultiert. Nach vollständiger Durchtrocknung lassen sich selbst nach dem Lackieren aufeinandergelegte Oberflächen wieder klebfrei voneinander trennen. Dies ist beispielsweise beim Lackieren von Fenster eine wichtige technische Eigenschaft.

Das Reinacrylat ist in Form einer bimodalen Acrylatdispersion in dem Lack enthalten, was eine gute Verarbeitung und einen guten Lackverlauf begünstigt. Als Verdicker ist in vorteilhafter Weise ein PU-Verdicker enthalten.

Der erfindungsgemäße Lack hat gemäß einem Vorschlag der Erfindung eine offene Zeit von mehr als 10 Minuten. Standardgemäß haben wäßrige Lacke allenfalls 7 Minuten offene Zeit, das heißt, sie trocknen sehr schnell. Dadurch ist das gleichmäßige Lackieren großer Oberflächen, beispielsweise Türen, nicht möglich. Durch die genannten offene Zeit von mehr als 10 Minuten, vorzugsweise 13 Minuten, wird dieser Nachteil behoben. Diese offene Zeit ergibt sich durch die Verwendung des Reinacrylats in bimodaler Acrylatdispersion mit den oben genannten Eigenschaften.

Gemäß einem Vorschlag der Erfindung wird als Pigment Titandioxyd zur Erzeugung eines weißen Lackes eingesetzt.

Der erfindungsgemäße Lack ist vollständig frei von organischen Lösungsmitteln, läßt sich im Innenbereich und im Außenbereich wetterbeständig einsetzen und leicht aber äußerst flexibel verarbeiten.

Beispielhaft wurden sehr gute Ergebnisse mit einer Lackrezeptur erzielt, wobei 5,3 % Wasser, 1,3 % Netzmittel, 1,4 % Verdicker, 0,4 % Entschäumer und 20,2 % Pigment, in diesem Fall TiO₂ in üblicher Weise zu einem pastösen Brei vermengt werden. Es werden dann 60,4 % Bindemittel in Form von Reinacrylat, beispielsweise SCX-8285 der Fa. Johnson Polymer b.v., mit einer Filmbildungstemperatur ≤ 5°C eingemischt. Vorteilhaft hat sich die nachträgliche Einmischung weiterer 5,3 % Verdicker und 0,1 % Konservierungsmittel erwiesen. Schließlich wurden zur Erzielung der thixotropen Eigenschaften 0,6 % Titanchelat und schließlich nochmals 5 % Wasser eingemischt. Die Angaben erfolgen in Gewichtsprozent.

Der beschriebene Lack läßt sich unter Bildung gleichmäßiger, deckender Oberflächen wetterbeständig im Innen- und Außenbereich hervorragend verarbeiten und einsetzen.

## Patentansprüche

1. Verfahren zur Herstellung eines Lackes durch Mischung von Wasser, Pigment und Bindemittel, wobei als Bindemittel thixotropierbares Reinacrylat mit einer Mindest-Filmbildungstemperatur von ≤ 14°C sowie ein PU-Verdicker eingemischt werden,
**dadurch gekennzeichnet,**
**daß** der Lack frei von organischen Lösungsmitteln ist.

2. Verfahren nach Anspruch 1, **dadurch gekennzeichnet, daß** Reinacrylat mit einer Mindest-Filmbildungstemperatur von ≤ 5°C eingemischt sind.

3. Verfahren nach einem der vorhergehenden Ansprüche, **dadurch gekennzeichnet, daß** Reinacrylat in einer bimodalen Acrylatdispersion eingemischt wird.

4. Verfahren nach einem der vorhergehenden Ansprüche, **dadurch gekennzeichnet, daß** der PU-Verdicker in wäßriger Lösung eingemischt wird.

5. Von organischen Lösungsmitteln freier Lack, hergestellt nach einem der vorhergehenden Ansprüche 1 bis 4, bestehend aus Wasser, Pigment und Bindemittel in Form von thixotropierbarem Reinacrylat mit einer Mindest-Filmbildungstemperatur ≤ 14°C und einem PU-Verdicker.

6. Lack nach Anspruch 5, **dadurch gekennzeichnet, daß** dieser Titanchelat enthält.

7. Lack nach einem der Ansprüche 5 bis 6, **dadurch gekennzeichnet, daß** dieser Reinacrylat mit einem Selbstvemetzungsmechanismus enthält.

8. Lack nach einem der Ansprüche 5 bis 7, **dadurch gekennzeichnet, daß** dieser Reinacrylat in Form einer bimodalen Acrylatdispersion enthält.

9. Lack nach einem der Ansprüche 5 bis 8, **dadurch gekennzeichnet, daß** dieser PU-Verdicker enthält.

10. Lack nach einem der Ansprüche 5 bis 9, **dadurch gekennzeichnet, daß** dieser eine offene Zeit von mehr als 10 Minuten aufweist.

11. Lack nach einem der Ansprüche 5 bis 10, **dadurch gekennzeichnet, daß** dieser Reinacrylat mit einer Mindest-Filmbildungstemperatur ≤ 5°C enthält.

12. Lack nach einem der Ansprüche 5 bis 11, **dadurch gekennzeichnet, daß** dieser Netzmittel, Verdicker, Entschäumer und/oder Konservierungsmittel enthält.

## Claims

1. A method of manufacturing a paint by mixing water, pigment and bonding agent, pure acrylate which may be rendered thixatropic with a minimum film forming temperature of ≤ 14°C constituting the bonding agent and a PU thickening agent being mixed in, **characterised in that** the paint is free of organic solvents.

2. A method as claimed in claim 1, **characterised in that** pure acrylate with a minimum film forming temperature of ≤ 5°C is mixed in.

3. A method as claimed in one of the preceding claims, **characterised in that** pure acrylate is mixed in in a bimodal acrylate dispersion.

4. A method as claimed in one of the preceding claims, **characterised in that** the PU thickening agent is mixed in in aqueous solution.

5. A paint free of organic solvents manufactured in accordance with one of the preceding claims 1 to 4, comprising water, pigment and bonding agent in the form of pure acrylate, which may be rendered thixotropic, with a minimum film forming temperature ≤ 14°C and a PU thickening agent.

6. A paint as claimed in claim 5, **characterised in that** it includes titanium chelate.

7. A paint as claimed in one of claims 5 to 6, **characterised in that** it includes pure acrylate with a self-crosslinking mechanism.

8. A paint as claimed in one of claims 5 to 7, **characterised in that** it includes pure acrylate in the form of a bimodal acrylate dispersion.

9. A paint as claimed in one of claims 5 to 8, **characterised in that** it includes PU thickening agent.

10. A paint as claimed in one of claims 5 to 9, **characterised in that** it has a drying time of more than 10 minutes.

11. A paint as claimed in one of claims 5 to 10, **characterised in that** it includes pure acrylate with a minimum film forming temperature ≤ 5°C.

12. A paint as claimed in one of claims 5 to 11, **characterised in that** it includes wetting agent, thickening agent, foam removing agent and/or preservative.

## Revendications

1. Procédé de préparation d'une peinture par mélange d'eau, d'un pigment et d'un liant, où comme liant, on mélange un acrylate pur pouvant être rendu thixotrope, avec une température minimale de formation de film ≤ 14°C, ainsi qu'un épaississant PU, **caractérisé en ce que** la peinture est exempte de solvant organique.

2. Procédé selon la revendication 1, **caractérisé en ce que** des acrylates purs avec une température minimale de formation de film ≤ 5°C, sont mélangés.

3. Procédé selon l'une quelconque des revendications précédentes, **caractérisé en ce que** l'acrylate pur est mélangé sous forme d'une dispersion bimodale d'acrylate.

4. Procédé selon l'une quelconque des revendications précédentes, **caractérisé en ce que** l'épaississant PU est mélangé en solution aqueuse.

5. Peinture exempte de solvant organique, préparée selon l'une quelconque des revendications 1 à 4, consistant en de l'eau, un pigment et un liant sous la forme d'un acrylate pur pouvant être rendu thixotrope, avec une température minimale de formation de film ≤ 14°C, et un épaississant PU.

6. Peinture selon la revendication 5, **caractérisée en ce qu'**elle contient un chélate du titane.

7. Peinture selon l'une quelconque des revendications 5 à 6, **caractérisée en ce que** celle-ci contient un acrylate pur avec un mécanisme d'autoréticulation.

8. Peinture selon l'une quelconque des revendications 5 à 7, **caractérisée en ce que** celle-ci contient un acrylate pur sous la forme d'une dispersion bimodale d'acrylate.

9. Peinture selon l'une quelconque des revendications 5 à 8, **caractérisée en ce que** celle-ci contient un épaississant PU.

10. Peinture selon l'une quelconque des revendications 5 à 9, **caractérisée en ce que** celle-ci présente une durée ouverte de plus de 10 minutes.

11. Peinture selon l'une quelconque des revendications 5 à 10, **caractérisée en ce que** celle-ci contient un acrylate pur avec une température minimale de formation de film ≤ 5°C.

12. Peinture selon l'une quelconque des revendications 5 à 11, **caractérisée en ce que** celle-ci contient un agent mouillant, un agent épaississant, un agent anti-mousse et/ou un agent de conservation.
